# EUROPEAN PATENT APPLICATION

(11) **EP 1 372 338 A1**
(43) Date of publication of application: **17.12.2003**
(21) Application number: 03101545.6
(22) Date of filing: 27.05.2003
(51) Int. Cl.: H04N 5/00, H04N 7/24, H04N 7/52

(54) **Method of video display using a decoder**

(30) Priority: 14.06.2002 FR 0207512
(71) Applicant: Thomson Licensing S.A., 92100 Boulogne Billancourt (FR)
(72) Inventor: Ritz, Edouard, 92310, SEVRES (FR); Creusot, Daniel, 78960, Voisins le Bretonneux (FR)
(74) Representative: Bonnans, Arnaud

(57) **Abstract**

The invention relates to a method for generating a video signal to be displayed applicable in a video decoder according to which, under a freeze-frame (freeze) command or a channel switching (channel hopping) command, the latest frame received is recorded in the frame plane of the decoder then this frame plane is activated for display and the video plane is deactivated. This enables the elimination of the display of an intermediate black screen usually displayed during the audio/video synchronization phase at the time of a channel hop or continuation after freeze frame.

Applications: Video decoders

## Description

The invention relates to a method for generating a video signal to be displayed using a decoder.

In a receiving and display system using notably a video decoder, a problem of display arises when the user orders certain special functions that interrupt the normal viewing of the video, such as:
- a freeze-frame then resume continuous display command which we shall call freeze or freeze/continue in the rest of the disclosure according to a terminology commonly used in the art, and which corresponds to freezing the picture being displayed on the display screen then resuming normal continuous display after a certain lapse of time corresponding to the period of freezing,
- switching channel or service (channel hopping), during which an absence of display can occur and therefore a black screen on the display monitor.

In a low-cost, limited-memory decoder, at the time of a freeze-frame command on a video receiving service, the first operation to be performed is to freeze the display of the latest decoded frame at the time the "Freeze" occurs. But to do so, the MPEG video decoding process must be halted so as not to delete from memory the frozen frame displayed on the screen. This is because the video decoding and display processes access the same video memory that stores the decoded (I or P) reference frames as well as a part of the B frames (which are not generally stored in their entirety in video memory) in video display memories containing the decoded frames and called frame buffers. The decoding process is always ahead of the display process, since this process entails writing the decoded frames into the frame buffers, before the display process comes to read them in order to display them. Moreover, the video decoding and display processes are respectively synchronized with the audio decoding and playing processes, so that audio and video remain synchronous.

Therefore, if the video display process is suspended, it is necessary to first stop the video decoding process, and consequently to interrupt synchronization between audio and video. It should further be noted that the decoding of the audio service carries on throughout the freeze time, even if it is no longer synchronized on the video, which may continue. When resuming continuous display (continue) (and even if the audio output is cut off), it is necessary to restart the video decoding process, wait until the video is resynchronized to the audio and finally restore the video display. But at the time the video decoding process is restarted, it deletes the data of the previous "frozen" frame from memory: it is therefore necessary before restarting video decoding, to display a temporary black screen throughout the video-to-audio resynchronization phase, before restoring the video display. Yet the resynchronization phase may take several hundred milliseconds, during which the black screen is displayed and the user waits for the video service to restart.

During channel hopping (switching channel), the constraints are the same as for a freeze-frame command for the video part. Three significant differences distinguish channel hopping from Freeze/Continue:
- first, during channel hopping, at the time that the latest decoded reference frame is frozen on the display, the output of the Audio Digital-to-Analog Converter (audio DAC) must be cut off and the audio decoding must be halted, whereas the audio decoding and playing may carry on in the case of the freeze/Continue command according to whether or not one wishes the audio to continue during the period of the freeze.
- secondly, during channel hopping, there is by definition a change of service between the freezing of the video of the previous service and resumption on the new service, whereas the service remains the same in the case of the freeze/continue command;
- thirdly, during channel hopping, the period separating freezing the video from restarting the video is directly linked to the channel hopping time, which may vary, whereas it is under the control of the user or of the application part in the case of the freeze/Continue command.

But apart from these three differences, the problem arises of the black screen during the video-to-audio resynchronization phase, when restarting on the next service, in the same way both in the case of channel hopping and in the case of freeze/Continue.

The invention therefore relates to a method for generating a video signal to be displayed applicable in a decoder intended for continuously receiving video/audio information, decoding it and outputting it as the video signal to be displayed. Such a decoder includes at least a video frame display memory or video plane and a fixed frame display memory or still plane separate from the video plane, the video and still planes being capable of being activated or deactivated independently of each other. This method provides that, under a special command such as a freeze-frame (freeze) or channel switching (channel hopping) command, the latest frame received is recorded in the said still plane then the display of the still plane is activated and the display of the video plane is deactivated, which enables elimination of the display of an intermediate black screen usually displayed during the audio/video synchronization phase at the time of a special command.

Before recording in the still plane, the method of the invention may provide the following steps:
a. the transfer of the latest frame (In) of the Intra or I type (according to the MPEG standard) being received to a control microprocessor memory of the decoder;
b. Software decoding of the said latest frame by the microprocessor.

After the transfer of the latest frame to the microprocessor memory, the audio and video decoding can be halted and an operation consisting in cutting off the sound can be provided.

Equally, the special command may trigger the halting of the audio/video decoding and the cutting off of the sound. The latest decoded frame is frozen in the video plane and is transferred from the video plane to the still plane and displayed in the still plane, the audio and video decoding then being restarted.

During the decoder's return to normal operation, the video plane is reactivated, the still plane is deactivated and the video is displayed continuously once again in the video plane in synchronization with the audio.

Furthermore, during the time that the frame is frozen in the still plane, the audio and video decoding processes having been restarted, audio and video are resynchronized, then the video plane is reactivated, the still plane is deactivated and the audio output is restored.

The various objects and characteristics of the invention will appear more clearly from the disclosure that follows by way of a non-restrictive example, and in the illustrative figures:
- Figures 1a and 1b, timing diagrams illustrating an example of embodiment of the method of display according to the invention initiated by the user, Figure 1a relating to a freeze-frame (freeze) command and Figure 1b relating to a reception channel change (channel hopping) command;
- Figures 2a and 2b, timing diagrams illustrating an example of a variant embodiment of the method of display according to the invention initiated in Figure 2a by a freeze-frame (freeze) command and, in Figure 2b, by a reception channel change (channel hopping) command;

A video decoder includes for display a video memory or video plane for temporarily recording the video information with a view to its display, a frame memory or frame plane for temporarily recording fixed frames to be displayed, a graphics memory or graphics plane for recording graphic or alphanumeric information to be displayed according to the operating options of the decoder.

Generally speaking, when the user issues a special command for the purpose of changing the normal operation of the decoder, such as a freeze-frame followed by a frame resumption command (freeze), or a channel change (channel hopping) command, the invention method provides for recording the latest frame being received in a temporary memory to enable this latest frame to be displayed on a display screen. For example, in a low-cost decoder, the frame plane is provided but is not used in many cases. This temporary memory may then be the frame plane of the decoder.

It will be noted that the (still) frame plane and the video plane of the decoder can be activated or deactivated independently of each other in the display.

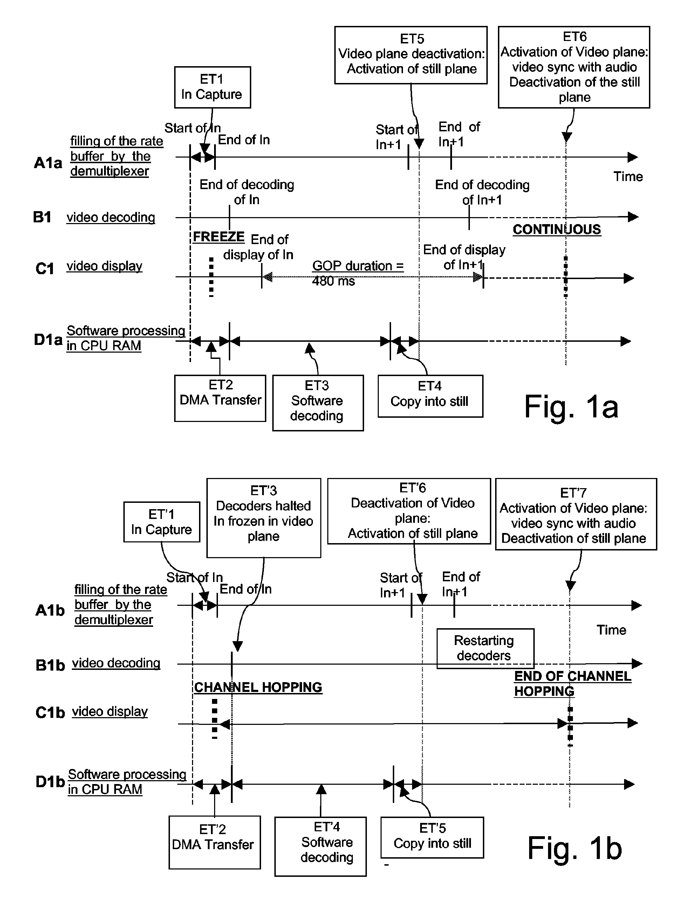

Referring to the timing diagram in Figure 1a, an example of embodiment of the invention method will be disclosed, applied first of all to the processing of a pause (freeze) command initiated by the user.

Row A1a depicts the filling process, by the demultiplexer, of a buffer memory, called a "rate buffer" in the art and intended to contain the audio and video data before decompression.

Row B1a depicts the video decoding hardware process.

Row C1a depicts the video display hardware process.

Row D1a depicts a software process according to the invention for decoding the latest frame and placing it in temporary memory, in the frame plane for example.

The decoder is assumed to receive a continuous video sequence. It is in the process of receiving a frame In (step ET1) in Figure 1a. The video frame In is in the process of detection in the MPEG encoded video stream coming from the demultiplexer and the frame In is captured "on the fly" in the rate buffer ahead in phase with respect to the video decoding process. During this step, as shown in row C1a the pause is ordered (freeze).

During step ET2, the captured frame In, which is of the Intra or I type according to the MPEG standard, is transferred from the rate buffer to the RAM memory of the decoder's CPU control unit.

During step ET3 the frame In captured in CPU RAM memory is decoded to a special format known under the designation of YUV 420 format.

During step ET4, the decoded frame In is recorded in the frame plane referred to as the still plane in the figures and in the rest of the disclosure.

During step ET5, the still plane is activated and the Video plane is deactivated, which means that the contents of the still plane are displayed on the display monitor of the user, who ceases to view the video and who sees the fixed frame In on his screen instead. It should be noted that the frame In appears frozen in the still plane. During this time, the decoding and playing of MPEG audio continues in synchronization.

In some cases of operation, it is possible that the frozen frame In appearing on the screen does not correspond to the latest video frame displayed, since the video decoding and display processes have continued in parallel in video memory. But as the processing time of the frame In in CPU memory is less than the duration (12*40ms = 480 ms) of a packet of frames called a GOP (Group Of Pictures) in the MPE standard, the frozen frame In displayed will, in fact, temporarily be the frame preceding the latest frame I displayed by the video decoder (shown as In+1 in Figure 1a), and the difference between the two frames should not be perceptible to the user in most instances.

During step ET6, the normal operation of the decoder is ordered by the user. The video plane is activated once again. At the time that the video sequence resumes playing in continuous operation, the display of the video plane is reactivated: the video reappears immediately and is still synchronized with the audio.
In addition, the still plane is deactivated.

Referring to Figure 1b, we shall go on now to disclose an example of the method according to the invention similar to that in Figure 1a applied to channel switching or channel hopping. Rows A1b to D1b of the timing diagram in Figure 1b have the same meanings as rows A1a to D1a in Figure 1a.

During step ET'1 (Figure 1b), as previously during step ET1 in Figure 1a the decoder is assumed to receive a continuous video sequence. It is in the process of receiving a frame In. The video frame In is in the process of detection in the MPEG encoded video stream coming from the demultiplexer and the frame In is captured "on the fly" in the rate buffer ahead in phase with respect to the video decoding process. During this step, as shown in row C1b, channel hopping is ordered.

During step ET'2, the captured frame In is transferred from the rate buffer to the RAM memory of the decoder's CPU control unit.

During step ET'3, at the end of transferring the frame I to the RAM memory, the audio and video decoders are halted. In addition, the output of the audio digital-to-analog converter (audio DAC) is cut off. The frame In is then frozen in the video plane.

During step ET'4, the frame In (which is of the Intra or I type according to the MPEG standard) is in RAM memory and is software decoded (into the YUV 420 format).

During step ET'5, the decoded frame In is recorded in the still plane.

During step ET'6, the frame (still) plane is activated and the Video plane is deactivated, which means that the contents of the frame (still) plane are displayed on the display monitor of the user, who ceases to view the video and who sees the fixed frame In on his screen instead. It should be noted that the frame In appears frozen in the still plane.

During this time, after the tuner/demodulator assembly has been adjusted to the frequency of the multiplex on which the new service called up by the user in his channel hopping is broadcast, and the demultiplexer has demultiplexed all the packet identifiers (known in the MPEG standard as PIDS) of the new service and after acquisition of the EMMs or Entitlement Management Messages, the audio and video decoders are restarted. Audio and video enter the resynchronization phase on the new service.

In some cases of operation, it is possible that the frozen frame In appearing on the screen does not correspond to the latest video frame displayed, since the video decoding and display processes have continued in parallel in video memory. But as previously, the displayed frozen frame In will, in fact, temporarily be the frame I preceding the latest frame displayed by the video decoder, and the difference between the two should not be perceptible to the user.

During step ET'7, the channel hopping command by the user being completed, the audio and video of the new service requested by the user being synchronized, the video plane is again activated and the output of the audio digital-to-analog converter (audio DAC) is restored. The display of the video plane is reactivated: the video reappears immediately in synchronization with the audio.

In addition, the still plane is deactivated. The system is once more in its initial operating state.

In the method example that has just been disclosed, provision has therefore been made for software processing of the latest frame captured at the time of initiating the freeze or channel hopping. We shall now go on to disclose another example of embodiment of the method according to which, at the time of special initiation (freeze, channel hopping, etc.), the video decoder is immediately halted and the latest frame being captured is frozen in the video plane.

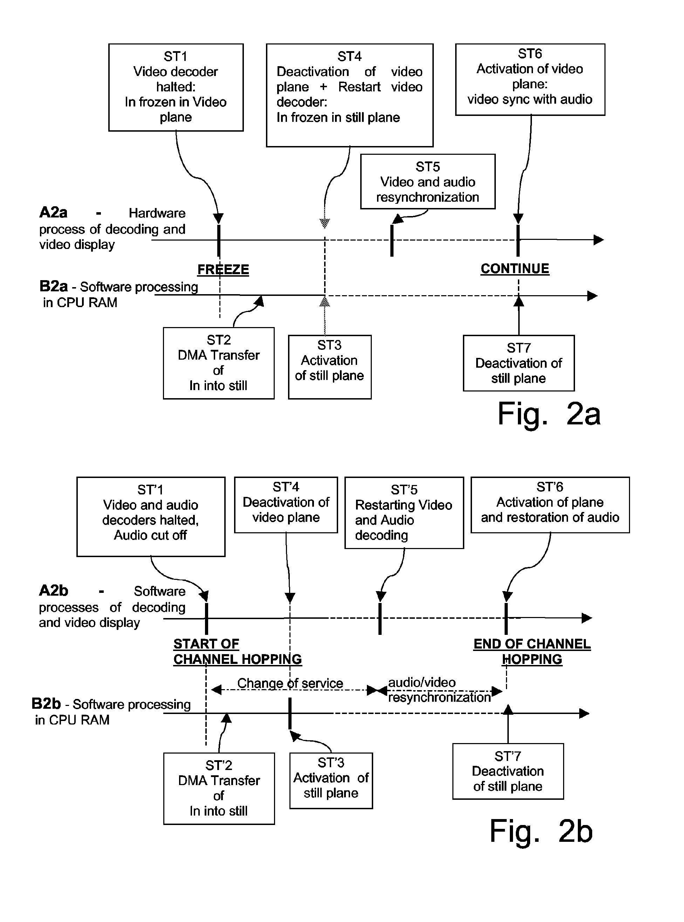

As previously, we shall disclose the operation of the method first of all when it is initiated by a freeze command (Figure 2a) then by a channel hop (Figure 2b).

Figures 2a and 2b show timing diagrams of operations. Rows A2a and A2b depict the hardware processes of video decoding and rows B2a and B2b, the software processing performed on the latest captured frame In recorded in CPU RAM.

In Figure 2a we see that, when the video freeze is initiated by the user, the video decoder is halted and the latest decoded frame In is frozen on the display in the video plane (step ST1).

Step ST1 leads to step ST2 during which the decoded frame In is transferred into the frame plane (still plane).

The frame plane is activated during step ST3.

Almost simultaneously, during step ST4, the video plane is deactivated and the frame In is displayed as a fixed frame on the user's screen. In addition, the video plane is restarted. Thus, the video decoder is only halted for a very short time and the accumulated delay between audio and video is therefore small. Subsequently, the time the video decoder takes to resynchronize to the audio (step ST5) is also very brief, as can be seen in Figure 2a. During this time the frame In is still displayed as a fixed frame on the screen.

During step ST6, the video and audio being synchronized, the video plane is activated once again: continuous video reappears immediately and is synchronized with the audio.

Finally, (step ST7) the frame plane is deactivated. The system is again in its original state of normal video viewing.

Referring to Figure 2b, we shall now go on to disclose this variant embodiment of the invention method when it is initiated by channel switching or channel hopping.

When channel hopping is initiated by the user, video freeze is initiated. During step ST'1, the video and audio are halted and the audio cut off (cut-off of the audio digital-to-analog decoder DAC): the latest decoded reference frame In is frozen on the display in the video plane.

During step ST'2, the decoded frame In is transferred in DMA into the still plane.

The still plane is activated during step ST'3.

The Video plane is deactivated during step ST'4: the frame In then appears frozen in the still plane, the frame In is displayed as a fixed frame on the user's screen.

During this time, after the tuner and the demodulator have been adjusted to the frequency of the multiplex on which the new service requested by the user is broadcast and the demultiplexer has demultiplexed all the PIDS of the new service (after acquisition of the EMMs), the audio and video decoders are restarted (step ST'5). Audio and video enter the resynchronization phase on the new service.

At the end of channel hopping, i.e. the moment the audio and the video plane are activated and the audio is restored (restoration of the audio DAC): the audio and video of the new service appear simultaneously and are synchronized. The video of the new service appears continuously on the user's screen.

The still plane is deactivated.

The examples of embodiment of the invention method previously disclosed can thus be used at the time of a special command (freeze, channel hopping) by the user for preventing the display of a black screen usually displayed during the audio/video synchronization phase during channel hopping or a freeze-frame followed by a frame continue.

## Claims

1. Method for generating a video signal to be displayed applicable in a decoder intended for continuously receiving video/audio information, decoding it and outputting it as the video signal, the said decoder including at least a video plane and a still plane separate from the video plane, the still and video planes being capable of being activated or deactivated independently of each other, **characterized in that** it includes, under a special command, a step of recording the latest frame received in the said still plane followed by a step of activating the still plane and deactivating the video plane.

2. Method according to Claim 1, **characterized in that** it includes, before the step of recording in the still plane, the following steps:
a. Transfer of the latest frame (In) of the Intra or I type (according to the MPEG standard) being received to a control microprocessor memory of the decoder;
b. Software decoding of the said latest frame by the microprocessor.

3. Method according to Claim 2, **characterized in that** after the transfer of the latest frame to the microprocessor memory, audio and video decoding are halted and an operation consisting in cutting off the sound is provided.

4. Method according to Claim 1, **characterized in that** the said special command triggers the halting of the audio/video decoding and the cutting off of the sound, the latest decoded frame being frozen in the video plane, the said frame being transferred from the video plane to the still plane and displayed in the still plane, and the audio and video decoding then being restarted.

5. Method according to one of Claims 2 or 4, **characterized in that**, during the decoder's return to normal operation, the video plane is reactivated, the still plane is deactivated and the video is displayed continuously once again in the video plane in synchronization with the audio.

6. Method according to one of Claims 3 or 5, **characterized in that**, during the time that the frame is frozen in the still plane, the audio and video decoding processes having been restarted, audio and video are resynchronized, then the video plane is reactivated, the still plane is deactivated and the audio output is restored.

7. Method according to any of the preceding claims, wherein the special command is a freeze command.

8. Method according to any of the preceding claims, wherein the special command is a channel switching command.
